# EUROPEAN PATENT SPECIFICATION

(11) **EP 4 137 916 B1**
(45) Date of publication and mention of the grant of the patent: **25.03.2026**
(21) Application number: 22184797.3
(22) Date of filing: 13.07.2022
(51) Int. Cl.: G06F 3/01, A63F 13/428, A63F 13/5375

(54) **GESTURE-BASED SKILL SEARCH**
GESTENBASIERTE SUCHE NACH FÄHIGKEITEN
RECHERCHE DE COMPÉTENCES BASÉE SUR DES GESTES

(30) Priority: 16.08.2021 US 202117403242
(43) Date of publication of application: 22.02.2023
(73) Proprietor: Sony Interactive Entertainment LLC, San Mateo, CA 94404 (US)
(72) Inventor: FORTUNA, Ellana, California, 94404 (US); SHELDON, Jennifer, California, 94404 (US); SHARDA, Manjari, California, 94404 (US); KARP, Sarah, California, 94404 (US)
(74) Representative: D Young & Co LLP

(56) References cited:
- US-A1- 2009 325 705
- US-A1- 2010 306 712
- MIYOSHI MAASA ET AL: "Ring Fit Adventure Ring Fit Adventure Wikipedia article", 10 August 2021 (2021-08-10), XP093009792, Retrieved from the Internet <URL:https://en.wikipedia.org/w/index.php?title=Ring_Fit_Adventure&oldid=1038055950> [retrieved on 20221220]
- UNKNOWN UNKNOWN: "Experience and Levels -Ring Fit Adventure Wiki Guide -IGN", 7 May 2020 (2020-05-07), XP093010557, Retrieved from the Internet <URL:https://www.ign.com/wikis/ring-fit-adventure/Experience_and_Levels> [retrieved on 20221222]
- NINTENDO OF AMERICA: "Ring Fit Adventure Overview Trailer - Nintendo Switch", 31 August 2020 (2020-08-31), XP093010746, Retrieved from the Internet <URL:https://www.youtube.com/watch?v=skBNiJd61Qw> [retrieved on 20221223]

## Description

### BACKGROUND OF THE INVENTION

### 1. Field of the Invention

The present invention generally relates to searching network devices. More specifically, the present invention relates to gesture-based searches of in-game skills.

### 2. Description of the Related Art

Presently available digital game titles support a variety of different in-game scenarios in which players (through their respective avatars or characters) are able to engage in a variety of different types of activities and exercise a variety of in-game skills. For example, racing game titles may challenge a player's driving skills, while first-person shooter game titles may challenge a player's aiming accuracy, and other combat game titles may challenge a player's skill with such weapons as swords, knives, axes, hammers, shovels, magical artifacts, etc. Similarly, different virtual terrains may require the player to control and navigate their avatar through swimming, climbing, jumping, and other actions within the game environment.

The player may generally control their avatar using one or more types of game controllers. There are presently a variety of different controllers (and controller modifications) with different buttons, touchpads, sensors, microphones, etc., in different configurations and layouts. Different combinations of user input (*e.g*., sequence or synchronization of button presses, touchpad and other gestures, verbal commands, or other input) may be required to perform different types of in-game moves, maneuvers, or other exercise of in-game action. Because different game titles may include different activities, the specific input combinations may result in different in-game moves. In addition, entering an input combination incorrectly may result in a different in-game action than the one intended by the player.

Such variety and complexity of in-game actions and of controllers represent barriers to entry when players are introduced to a new or unfamiliar game title, controller, or game console system. A new or inexperienced player may therefore find gameplay difficult and frustrating without help or other type of guidance. Searching for such help or guidance may be complicated, however, by language barriers that may arise where the player may not be familiar with the vocabulary or names of virtual elements within the in-game environment. The player may not even know how to perform such a search. For example, merely viewing other players perform an action *(e.g.,* whether using an in-game object or not) does not necessarily tell the player what the action or object is called nor how to perform such action themselves.

There is, therefore, a need in the art for improved systems and methods of gesture-based searches of in-game skills. Previously proposed arrangements are disclosed by Miyoshi Maasa ET AL: "Ring Fit Adventure Ring Fit Adventure Wikipedia article", 10 August 2021, URL: https://en.wikipedia.org/w/index.php?title=Ring_Fit_Adventure&oldid= 1038055950; "Experience and Levels -Ring Fit Adventure Wiki Guide - IGN", 7 May 2020 URL: https://www.ign.com/wikis/ring-fit-adventure/Experience and Levels; Nintendo Of America: "Ring Fit Adventure Overview Trailer- Nintendo Switch", 31 August 2020, URL: https://www.youtube.com/watchN=skBNiJd6lQw US 2009/325705 A1; and US 2010/306712 A1.

### SUMMARY OF THE CLAIMED INVENTION

The invention is defined by the appended claims.

### BRIEF DESCRIPTION OF THE DRAWINGS

FIG. 1 illustrates an exemplary network environment in which a system for gesture-based skill search may be implemented.
FIG. 2 illustrates an exemplary uniform data system (UDS) that may be used to provide data to a system for gesture-based skill search.
FIG. 3 is a flowchart illustrating an exemplary method for gesture-based skill search.
FIG. 4 is a block level diagram of an exemplary user device that may be used to performed a gesture-based skill search.
FIG. 5 is a block diagram of an exemplary electronic entertainment system that may be used in embodiments of the present invention.

### DETAILED DESCRIPTION

Embodiments of the present invention include systems and methods for gesture-based skill search. A memory stores a map regarding one or more virtual actions, each virtual action associated with a set of data associated with performing a corresponding action in a real-world environment. A gesture-based search server that captures data regarding a action by a user in the real-world environment. The gesture-based search server identifies a current progress level of the user within the virtual environment associated with one or more available virtual actions. The gesture-based search server identifies that the captured data corresponds to an identified one of the available virtual actions based on a match between the captured data and the set of data associated with the identified virtual action as indicated by the map. The gesture-based search server initiates a search of one or more databases for instructions corresponding to the identified virtual action.

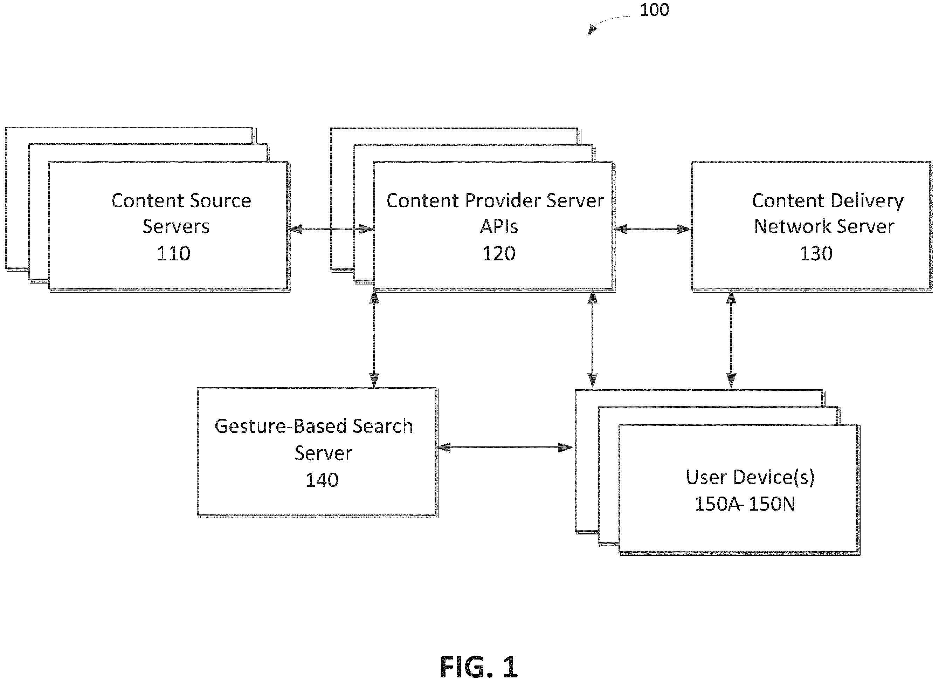

FIG. 1 illustrates an exemplary network environment in which a system for gesture-based skill search may be implemented. The network environment 100 may include one or more content source servers 100 that provide digital content (e.g., games, other applications and services) for distribution, one or more content provider server application program interfaces (APIs) 120, content delivery network server 130, a gesture-based search server 140, and one or more user devices 150A-150N. The servers described herein may include any type of server as is known in the art, including standard hardware computing components such as network and media interfaces, non-transitory computer-readable storage (memory), and processors for executing instructions or accessing information that may be stored in memory. The functionalities of multiple servers may be integrated into a single server. Any of the aforementioned servers (or an integrated server) may take on certain client-side, cache, or proxy server characteristics. These characteristics may depend on the particular network placement of the server or certain configurations of the server.

Content source servers 110 may maintain and provide a variety of digital content available for distribution. The content source servers 110 may be associated with any content provider that makes its content available for access over a communication network. Such content may include not only digital video and games, but also other types of digital applications and services. Such applications and services may include any variety of different digital content and functionalities that may be provided to user devices 150. An example of content source servers 110 may be an Internet website that provides downloadable content and/or streaming content. The content provided by the content source servers 110 can include any type of multimedia content, such as movies, games, static/dynamic content, pictures, social media content, social media websites, etc. The user device 150 may include a plurality of different types of computing devices. In some embodiments, content data is transmitted from the content source servers 110 to a computing device, where the content data is then rendered by the computing device in a format suitable for use by user device 150.

The content from content source server 110 may be provided through a content provider server API 120, which allows various types of content sources server 110 to communicate with other servers in the network environment 100 (e.g., user devices 150). The content provider server API 120 may be specific to the particular language, operating system, protocols, etc. of the content source server 110 providing the content, as well as the user devices 150. In a network environment 100 that includes multiple different types of content source servers 110, there may likewise be a corresponding number of content provider server APIs 120 that allow for various formatting, conversion, and other cross-device and cross-platform communication processes for providing content and other services to different user devices 150, which may use different operating systems, protocols, etc., to process such content. As such, applications and services in different formats may be made available so as to be compatible with a variety of different user device 150.

Content source servers 110 may also be inclusive of online servers associated with social media applications, which may be programmed to provide one or more social media graphs the user in order to identify social contacts of the user. These users may not be social contacts or socially associated with the user but may have played one or more video games with the user. The friend listing can include additional information about the user's friends, such as depicting games which are owned by each friend, identifying an online status of the friend (e.g. online, offline, inactive, etc.), the friend's last login and its duration, the last game played by the friend, etc. The social network includes user data, which includes data such as user's social graphs, posts, pictures, videos, biographical information, etc.

The content provider server API 120 may further facilitate access of each of the user devices 150 to the content hosted or services provided by the content source servers 110, either directly or via content delivery network server 130. Additional information, such as metadata, about the accessed content or service can also be provided by the content provider server API 120 to the user device 150. As described below, the additional information (i.e. metadata) can be usable to provide details about the content or service being provided to the user device 150. In some embodiments, the services provided from the content source servers 110 to the user device 150 via the content provider server API 120 may include supporting services that are associated with other content or services, such as chat services, ratings, and profiles that are associated with a particular game, team, community, etc. In such cases, the content source servers 110 may also communicate with each other via the content provider server API 120.

The content delivery network server 130 may include a server that provides resources, files, etc., related to the content from content source servers 110, including various content and service configurations, to user devices 150. The content delivery network server 130 can also be called upon by the user devices 150 that request to access specific content or services. Content delivery network server 130 may include universe management servers, game servers, streaming media servers, servers hosting downloadable content, and other content delivery servers known in the art.

Gesture-based search server 140 may include any data server known in the art that is capable of receiving data from the user device 150. The content rendered by the gesture-based search server 140 can be for essentially any type of computer application and may include one or more types of content such as game, movie, audio, images, multimedia, among others. In some embodiments, the content, or portions thereof, is generated by the gesture-based search server 140. In some embodiments, the content, or portions thereof, is streamed from content source server 110 over network 100 to the computing device. In some embodiments, the content, or portions thereof, is streamed from a cloud gaming infrastructure over the network 100 to the computing device. The infrastructure may direct various types of content to be transmitted from the content source servers 110 over the network 100 to the computing device.

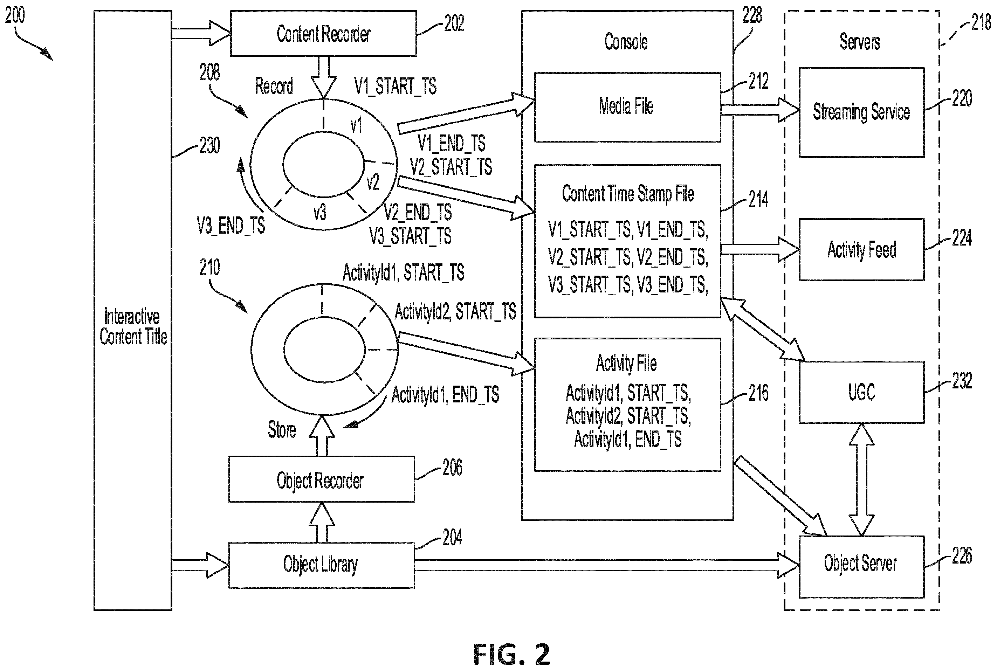

In an exemplary embodiment, gesture-based search server 140 may store or access a store that includes a search map for one or more game titles. Each game title may be associated with a different search map, which may include information regarding in-game actions available the respective game title (*e.g*., swinging a sword in a game environment), information regarding how the in-game actions correspond to real-world equivalent action (*e.g*., swinging an object in a real-world environment), and an associated input combination(s) associated with initiating the action within the game environment using one or more types of controllers. Some game titles may further limit the types of the actions that are available within different levels, activities, or other portions of the associated in-game environment. Such limitations may be saved in activity files generated by UDS systems (described in further detail in relation to FIG. 2) and may further be used to filter searches by a searching user that is actively engaged in gameplay of a particular game title in a particular portion of the game environment or gameplay session.

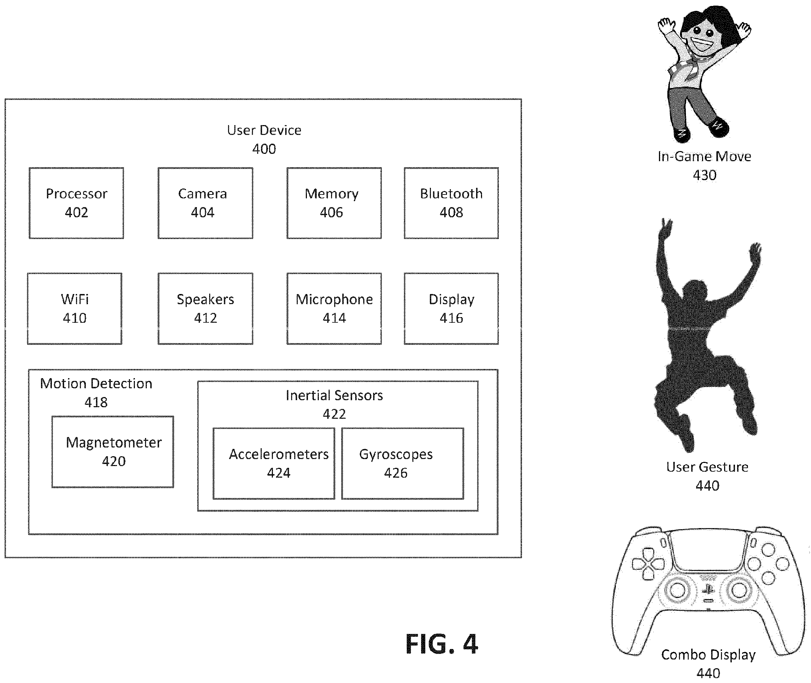

Different triggers - which may be customized to the user -may be used to initiate a gesture-based skill search. For example, verbal, key-based, or gestural commands may indicate that the user wishes to initiate such a gesture-based skill search. Such a command may trigger a camera and/or other sensors *(e.g.,* of the user device(s) 150) to capture images and/or other sensor data regarding the real-world environment in which the user is located. For example, a camera may capture images of the user swinging their arm in the real-world in a recreation of an avatar swinging a sword in the digital environment. The camera (discussed in further detail in relation to FIG. 4) can be configured to include multiple image capture devices, such as a stereoscopic pair of cameras, an infrared camera, a depth camera, or combinations thereof. In some embodiments, one or more microphones (discussed in further detail in relation to FIG. 4) can also be used to capture sound from the real-world environment of the user. Meanwhile, other sensors *(e.g.,* accelerometers, gyroscopes) associated with the user *(e.g.,* by way of a controller, mobile device, wearable device, handheld device, etc.) may also capture data regarding the real-world action.

Such images, audio, and other sensor data my be provided to gesture-based search server 140 for analysis. Using the stored maps, the gesture-based search server 140 may be able to match the received sensor data regarding the real-world action to an in-game action available in the associated game title. In some implementations, the received sensor data may indicate multiple available in-game actions, and in such cases, different parameters may be used to filter the available in-game actions. As noted above, some game titles allow for different in-game actions within different portions of the game environment or game sessions. Such data may be provided in activity files and used to filter the available in-game actions and identify which may be available at an identified portion of the game environment or game session currently associated with the searching user. Alternatively or in addition, a menu regarding the multiple available in-game actions may be displayed in a graphical user interface for selection by the searching user.

When an in-game action is identified or selected, the graphic user interface may be updated by gesture-based search server 140 to include a display of a controller associated with the user, as well as instructions on how to use the controller to perform the identified in-game action. Such instructions may include visual, audio, and/or textual instructions. In some embodiments, the instructions may be provided as an overlay, within a pop-up window, or otherwise provided to the user device 150 during a gameplay session while the user is still engaged in gameplay in a game environment.

Thus, the gesture-based search server 140 may map data regarding a real-world action to one or more in-game actions and then further map an identified one of the in-game actions to input combinations and associated instructions. A user who is actively playing a game may therefore initiate a search to be performed by gesture-based search server 140 without leaving the in-game environment, pausing or ending a current gameplay session, or switching to a different device or platform *(e.g.,* to perform traditional online searches).

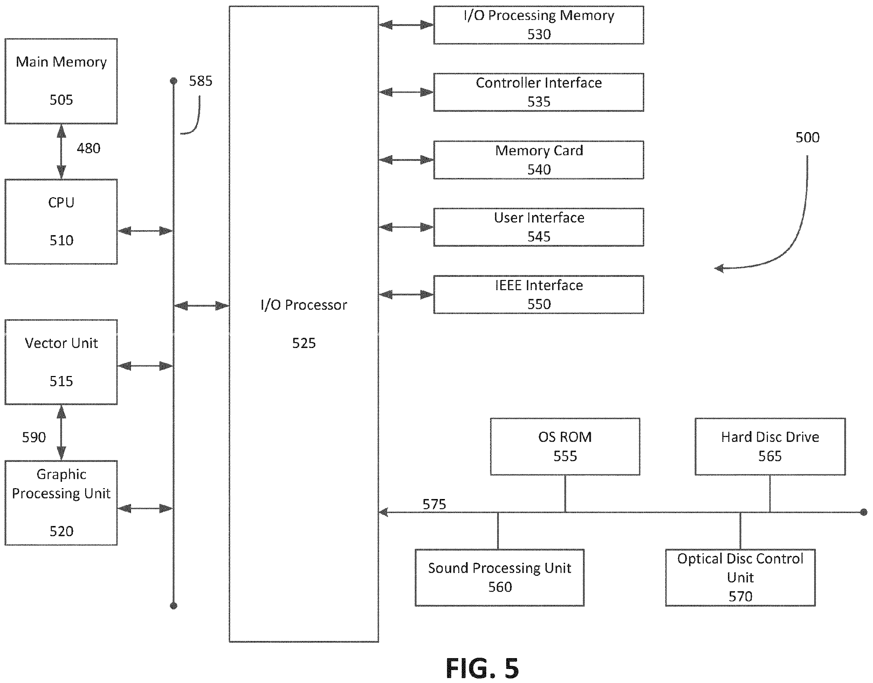

The user device 150 may be a server that provides an internal service (e.g., to other servers) in network environment 100. In such cases, user device 150 may correspond to one of the content source servers 110 described herein. Alternatively, the user device 150 may be a client device that may include any number of different gaming consoles, mobile devices, laptops, and desktops. Such user devices 150 may also be configured to access data from other storage media, such as, but not limited to memory cards or disk drives as may be appropriate in the case of downloaded services. Such user devices 150 may include standard hardware computing components such as, but not limited to network and media interfaces, non-transitory computer-readable storage (memory), and processors for executing instructions that may be stored in memory. These user devices 150 may also run using a variety of different operating systems (e.g., iOS, Android), applications or computing languages (e.g., C++, JavaScript). An exemplary client device 150 is described in detail herein with respect to FIG. 5. Each user device 150 may be associated with participants or other types of spectators of a collection of digital content streams.

In some embodiments, the user device 150 is configured to execute games locally on the processing hardware of a computing device or game console. The games or content can be obtained in any form, such as physical media form (e.g., digital discs, tapes, cards, thumb drives, solid state chips or cards, etc.) or by way of download from the Internet, via a communication network. In some embodiments, the computing device functions as a client in communication over the communication network with the cloud gaming infrastructure. The cloud gaming infrastructure may maintain and execute a video game being played by the user device 150. Inputs received from the user device 150, the controller, and the camera (and other sensors), may be transmitted to the cloud gaming infrastructure, which processes the inputs to affect the game state of the executing video game.

Game data from a video game, such as video data, audio data, and tactile feedback data, can be transmitted from the content source servers 110 to the user devices 150. The computer system may further process the game data before transmission to the appropriate device, or may directly transmit the game data to the appropriate device. For example, video and audio streams may be transmitted to the user devices 150.

The user device 150 may also include or be associated with a controller configured to receive inertial sensor data from inertial sensors within the user device 150. The inertial sensor data indicates movement of the controller and/or user device 150 in accordance with movement of a user with whom the user device 150 is associated. The movement of the user is based on a virtual reality scene displayed within the user device 150. A route or trajectory of movement and a rate of movement of the user device 150 can be determined from inertial sensor data. In some embodiments, the route or trajectory of movement of the head mounted display corresponds to one or more user movements within a set of user movements including a forward lean, a backward lean, a left lean, a right lean, a left head turn, a right head turn, an upward head tilt, a downward head tilt, a squat, and a jump. However, in other embodiments, the route or trajectory of movement of the head mounted display may correspond to essentially any user movement within the movement capabilities of the human body.

In some embodiments, the user device 150 can be used to manipulate, e.g., grab, move, push, pull, etc., a virtual object in a virtual reality (VR) or an augmented reality (AR) scene, which is displayed on the user device 150 or on another computing device, e.g., a television, a computer, etc. A virtual hand within a game moves when the user moves his/her hand while wearing the user device 150. Moreover, fingers of a virtual hand in the game move when the user moves his/her fingers while wearing the user device 150. Position and/or orientation of the fingers are determined from image data captured using the cameras described above and in FIG. 5 to generate the movement of fingers of the virtual hand. One or more examples of a virtual object include a virtual vehicle, a virtual hand of the user, a virtual user, a virtual sword, an avatar of the user, a virtual finger, a virtual finger joint, a virtual tree, a virtual flower, etc.

The display of the user device 150 may generate a three-dimensional scene incorporating an avatar into virtual space or virtual environment with virtual interactive objects. The gesture-based search server 140 receives visual and/or distance information about the user captured by the user device 150. The gesture-based search server 140 extracts movement information describing movement of the user. The movement information can be encoded so as to describe movement of a "skeleton" of the user that is made up of key points within the user's body. The gesture-based search server 140 may allow augmentation of content by allowing introduction of user-related information, such as a user's avatar, identifier, representative image, etc., into the VR space presented at the user device 150A-150N of the users.

The user's avatar may be automatically transformed from a single digital image into an animated 3D avatar. In particular, the user can upload a digital image or other image on the user device 150 and receive one or more avatars featuring different facial expressions and/or animations in return. The avatar is displayed to the user to be used as any still or animated image (for example, in GIF format). For example, the avatar can be sent to other users via SMS, MMS, e-mail messages, chats (like Facebook chat), instant messengers (like Skype or Windows Messenger), Twitter, blogs, forums or other means of electronic communication in purpose of displaying the user's emotion.

In some embodiments, the avatar may be realistically based on the user, for example having the same facial features, clothing, and body shape. In other embodiments, the avatar may be intentionally unrealistic, for example by mapping the movements of the user to facial features of a celebrity, a movie star, a politician, a video game character, or another user. The avatar may be an amalgam of realistic elements and intentionally unrealistic elements- for example, the face of the user may be used in the avatar, but the avatar may be given different clothing or a different body shape. Alternately, body of the user may be used in the avatar, but the avatar may be given the face of a celebrity, a movie star, a politician, a video game character, or another user.

In an embodiment, a user of a user device 150A such as a Sony^{®} Playstation 3^{®} entertainment device (PS3) navigates within one instance of a large plurality of virtual 3D environments available from an on-line server, each populated by a comparatively small proportion of the total number of other users currently on-line. Within this environment, these users are represented by avatars, enabling social interaction between other users on other user devices 150B-150N and with the virtual environment itself, which may provide facilities such as pool tables, bowling alleys, arcade games and TV screens streaming on-line content.

The user device 150A transmits the information describing movements of the user and/or movements of the corresponding avatar to other user devices 150B-150N or to the gesture-based search server 140 that then sends this information on to the other user devices 150B-150N, so that the other user devices 150B-150N can generate a scene featuring accurate movements by the avatar. The user device 150A receives information describing movements of the other users and/or movements of the other users, from the other user devices 150B-150N, or from an intermediary device such as the gesture-based search server 140 that then sends this information on to first user device 150A as it was received from the other user devices 150B-150N, so that the first user device 150A can generate a scene featuring accurate movements by the second avatar.

The user associated with the user device 150A may be matched with the other user devices 150B-150N in a virtual reality environment based upon characteristics of a physical environment of each user. In one example, information regarding characteristics of a physical space in which each user is located may be received by the gesture-based search server 140. The information regarding the characteristics of the physical space of each user may be used to match users that are located in different physical spaces with similar characteristics. Users are matched for participation in a virtual multiplayer entertainment experience. This matching may be based on the characteristics of the physical spaces in which each is located. For example, the matching may be performed based on a degree of similarity of the characteristics of the physical spaces in which each user is located.

The user device 150 or computing device generates a representation of the movements of the user as captured and has the avatar perform the generated representation of the movements of the user. The user device 150 also generates a representation of the movements of the second user as received and has the second avatar perform the generated representation of the movements of the second user. The user device 150 also updates the virtual space or environment and any virtual interactive objects as appropriate.

Any relevant events in the virtual environment may be communicated between the user device 150 using a common co-ordinate system, such that events in the virtual environment are referenced with respect to a physical reference position. Only a single instance of position data has to be exchanged between the user devices 150 in order to establish the common coordinate system, and indeed this may in fact be a one-way transfer of data (one user device 150A telling another user device 150B where the first user device 150A is positioned and oriented relative to the second user device 150B). However, it is potentially more reliable if the user devices 150 exchange position data more than once, for example frequently during a session of virtual interaction in the shared coordinate system. Subsequent relative movements of the user devices 150 in the real environment can be replicated in the virtual environment. It will be appreciated therefore that the real and virtual positions of a user device will substantially coincide.

Subsequent movement away from the common reference position may be tracked by the gesture-based search server 140 (acting as a motion tracking arrangement) using the accelerometers and gyroscopes (motion sensors) of the user device 150 to maintain a cumulative change in displacement and orientation with respect to the common reference position. The relationships between acceleration, velocity and displacement (both laterally and rotationally) are well known and not described in detail herein. Whilst accelerometers and gyroscopes may be mentioned separately or mentioned collectively as motion sensors, it will be understood that accelerometers and gyroscopes can be also be collectively considered to be accelerometers, with the primary distinction being the lateral or rotational nature of the detected acceleration.

FIG. 2 illustrates an exemplary uniform data system (UDS) 200 that may be used to provide data to a system for gesture-based skill search. Based on data provided by UDS, gesture-based search server 140 can be made aware of what in-game objects, entities, activities, and events that users have engaged with, and thus support analysis of and filtering in relation to in-game activities. Each user interaction may be associated the metadata for the type of in-game interaction, location within the in-game environment, and point in time within an in-game timeline, as well as other players, objects, entities, etc., involved. Thus, metadata can be tracked for any of the variety of user interactions that can occur in during a game session, including associated activities, entities, settings, outcomes, actions, effects, locations, and character stats. Such data may further be aggregated, applied to data models, and subject to analytics. Such a UDS data model may be used to assign contextual information to each portion of information in a unified way across games.

As illustrated in FIG. 2, an exemplary console 228 *(e.g.,* a user device 150) and exemplary servers 218 *(e.g.,* streaming server 220, an activity feed server 224, an user-generated content (UGC) server 232, and an object server 226) are shown. In one example, the console 228 may be implemented on or in association with the content source server 110, content delivery network server 130, a cloud server, or on any combination of the servers 218 and servers of FIG. 1. In an exemplary example, a content recorder 202 may receive and record content *(e.g.,* media) from an interactive content title 230 onto a content ring-buffer 208. Such ring-buffer 208 may store multiple content segments *(e.g.,* v1, v2 and v3), start times for each segment (*e.g.,* V1_START_TS, V2_START_TS, V3_START_TS), and end times for each segment (*e.g.,* V1_END_TS, V2_END_TS, V3_END_TS). Such segments may be stored as a media file 212 (*e.g.,* MP4, WebM, etc.) by the console 228. Such media file 212 may be uploaded to the streaming server 220 for storage and subsequent streaming or use, though the media file 212 may be stored on any server, a cloud server, any console 228, or any user device 150. Such start times and end times for each segment may be stored as a content time stamp file 214 by the console 228. Such content time stamp file 214 may also include a streaming ID, which matches a streaming ID of the media file 212, thereby associating the content time stamp file 214 to the media file 212. Such content time stamp file 214 may be uploaded and stored to the activity feed server 224 and/or the UGC server 232, though the content time stamp file 214 may be stored on any server, a cloud server, any console 228, or any user device 150.

Concurrent to the content recorder 202 receiving and recording content from the interactive content title 230, an object library 204 receives data from the interactive content title 230, and an object recorder 206 tracks the data to determine when an object beings and ends. The object library 204 and the object recorder 206 may be implemented on the platform server 120, a cloud server, or on any of the servers 218. When the object recorder 206 detects an object beginning, the object recorder 206 receives object data *(e.g.,* if the object were an activity, user interaction with the activity, activity ID, activity start times, activity end times, activity results, activity types, etc.) from the object library 204 and records the activity data onto an object ring-buffer 210 *(e.g.,* ActivityID1, START_TS; ActivityID2, START_TS; ActivityID3, START_TS). Such activity data recorded onto the object ring-buffer 210 may be stored in the object file 216. Such object file 216 may also include activity start times, activity end times, an activity ID, activity results, activity types (*e.g*., competitive match, quest, task, etc.), user or peer data related to the activity. For example, an object file 216 may store data regarding an item used during the activity. Such object file 216 may be stored on the object server 226, though the object file 216 may be stored on any server, a cloud server, any console 228, or any user device 130.

Such object data *(e.g.,* the object file 216) may be associated with the content data *(e.g.,* the media file 212 and/or the content time stamp file 214). In one example, the UGC server 232 stores and associates the content time stamp file 214 with the object file 216 based on a match between the streaming ID of the content time stamp file 214 and a corresponding activity ID of the object file 216. In another example, the object server 226 may store the object file 216 and may receive a query from the UGC server 232 for an object file 216. Such query may be executed by searching for an activity ID of an object file 216 that matches a streaming ID of a content time stamp file 214 transmitted with the query. In yet another example, a query of stored content time stamp files 214 may be executed by matching a start time and end time of a content time stamp file 214 with a start time and end time of a corresponding object file 216 transmitted with the query. Such object file 216 may also be associated with the matched content time stamp file 214 by the UGC server 232, though the association may be performed by any server, a cloud server, any console 228, or any user device 150. In another example, an object file 216 and a content time stamp file 214 may be associated by the console 228 during creation of each file 216, 214.

The activity files generated by UDS 200 may be provided or accessed by gesture-based search server 140 for use in analyzing, filtering, and matching data regarding real-world actions to in-game actions in one or more maps. For example, an activity file may include gameplay data regarding a specific gameplay session of a specific game title by a specific peer player that is performs one or more in-game actions when the searching user initiated the search. The gesture-based search server 140 may use the data from the activity file to identify the game title, player, in-game actions being performed, and time proximity between the in-game actions and the search trigger *(e.g.,* for searching in real-time or close to real-time). Such identified parameters or conditions under which the search is made may be used by gesture-based search server 140 to filter search results for relevance.

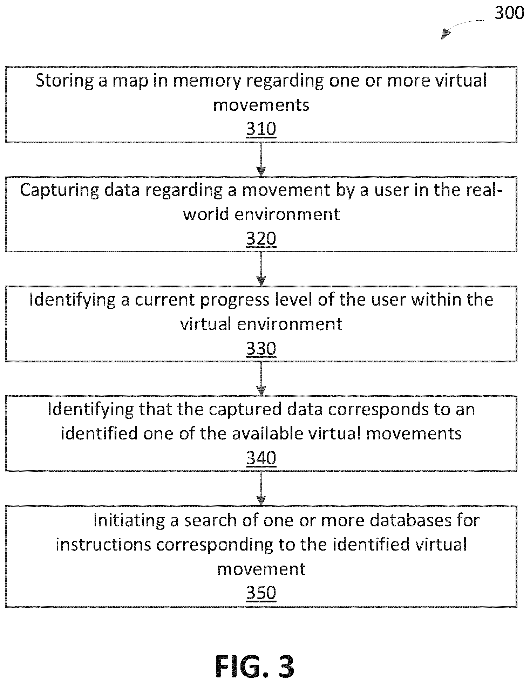

FIG. 3 is a flowchart illustrating an exemplary method for gesture-based skill search. The methods 300 of FIG. 3 may be embodied as executable instructions in a non-transitory computer readable storage medium including but not limited to a CD, DVD, or non-volatile memory such as a hard drive. The instructions of the storage medium may be executed by a processor (or processors) to cause various hardware components of a computing device hosting or otherwise accessing the storage medium to effectuate the method. The steps identified in FIG. 3 (and the order thereof) are exemplary and may include various alternatives, equivalents, or derivations thereof including but not limited to the order of execution of the same.

At step 310, a map regarding one or more virtual actions is stored in memory. Each virtual action *(e.g.,* as performed within a virtual environment) is associated with a set of data associated with performing a corresponding action in a real-world environment and with instruction data regarding input combinations that result in performance of the virtual action. Different variations of a map may be associated with a specific game title, set of game titles, game genre, game developer, game console, game controller, set of controller modifications, game environment, in-game activities, etc.

At step 320, data regarding a movement by a user in the real-world environment is captured. The movement by the user in the real-world environment may be indicated by real-world environment data captured by the user device 150 (and associated sensors). The data may be image data captured by the camera of the user device 150. In another embodiment, the data may be captured by inertial sensors on the user device 150. The real-world environment data along with the one or more images and the image data of the user interacting in the real-world environment captured the user device 150 may be forwarded to the gesture-based search server 140.

At step 330, a current progress level of the user within the virtual environment may be identified based on one or more activity files associated with current gameplay by the user. The current identified progress level is associated with one or more available virtual movements. The user may be matched with one or more of the other users based on the user's identified progress level and the other users' progress level. The activity files associated with the other users may also be retrieved and used to analyze the real-world movement data captured in step 320.

At step 340, it is identified that the captured data corresponds to an identified one of the available virtual movements based on a match between the captured data and the set of data associated with the identified virtual movement as indicated by the map. In an embodiment, a difference between the captured data and the set of data associated with the identified virtual movement as indicated by the map. When the difference is within a predetermined threshold, the captured data may be determined to correspond to an identified available virtual movement. In an embodiment, the available virtual movements are filtered based on other users performing the virtual movement correctly and one or more available virtual movements are based on the filtered users.

At step 350, a search of one or more databases for instructions corresponding to the identified virtual movement is initiated. In some embodiments, the instructions may be stored in the map itself. The map may also link or otherwise point to other databases where the instructions are maintained. The instructions for the identified in-game action may therefore be retrieved and provided to the user device 150.

FIG. 4 is a block level diagram of an exemplary user device that may be used to performed a gesture-based skill search. It should be understood that more or less components can be included or excluded from the user device 400 than what is shown in FIG. 4, depending on the configuration and functions enabled. The user device 400 may include a processor 402 for executing program instructions. A memory 406 is provided for data storage purposes, and may include both volatile and non-volatile memory. A display 416 is included which provides a visual interface that a user may view. The display 416 can be defined by one single display, or in the form of a separate display screen for each eye. When two display screens are provided, it is possible to provide left-eye and right-eye video content separately. Separate presentation of video content to each eye, for example, can provide for better immersive control of three-dimensional content of the virtual reality scene.

A motion detection module 418 may include any of various kinds of motion sensitive hardware, such as a magnetometer 420, an accelerometer 424, and a gyroscope 426. The user device 400 may be equipped with inertial sensors 422 configured to generate inertial sensor data indicating movement of the user device 400 in accordance with movement of the user with which the user device 400 is associated. The magnetometer 420 measures the strength and direction of the magnetic field in the vicinity of the user device 500. In some embodiments, three magnetometers 420 are used within the user device 400, ensuring an absolute reference for the world-space yaw angle. In some embodiments, the magnetometer 520 is designed to span the Earth's magnetic field, which is ±80 microtesla. Magnetometers are affected by metal, and provide a yaw measurement that is monotonic with actual yaw. The magnetic field may be warped due to metal in the environment, which causes a warp in the yaw measurement. If necessary, this warp can be calibrated using information from other sensors such as the gyroscope or the camera. In some embodiments, the accelerometer 424 is used together with the magnetometer 420 to obtain the inclination and azimuth of the user device 400.

In some embodiments, the present invention can also include one or more external inertial sensors positioned on the body of the user. The present invention may include an operation for comparing the external inertial sensor data to the inertial sensor data received from the inertial sensors 422 in the user device 400 in order to determine a specific movement made by the user.

The accelerometer 424 is a device for measuring acceleration and gravity induced reaction forces. Single and multiple axis (e.g., six-axis) models are able to detect magnitude and direction of the acceleration in different directions. The accelerometer 524 is used to sense inclination, vibration, and shock. In one embodiment, three accelerometers 524 are used to provide the direction of gravity, which gives an absolute reference for two angles (world-space pitch and world-space roll).

The gyroscope 426 is a device for measuring or maintaining orientation, based on the principles of angular momentum. In one embodiment, three gyroscopes 426 provide information about movement across the respective coordinate axes (x, y, and z) based on inertial sensing. The gyroscopes 426 help in detecting fast rotations. However, the gyroscopes 426 can drift overtime without the existence of an absolute reference. This requires resetting the gyroscopes 426 periodically, which can be done using other available information, such as positional/orientation determination based on visual tracking of an object, accelerometer, magnetometer, etc.

A camera 404 is provided for capturing images and image streams of the real-world environment to which the user device 400 is exposed. More than one camera 404 (optionally) may be included in the user device 400, including a camera 404 that is rear-facing (directed away from a user when the user is viewing the display of the user device 400), and a camera 404 that is frontfacing (directed towards the user when the user is viewing the display of the user device 400). In some embodiments, a camera 404 may be included in the user device 400 for sensing depth information of objects in the real-world environment to which the user device 500 is exposed.

The user device 400 includes speakers 412 for providing audio output. Also, a microphone 414 may be included for capturing audio from the real-world environment, including sounds from the ambient environment, speech made by the user, etc.

A WiFi module 410 may be included for enabling connection of the user device 400 to the Internet via wireless networking technologies. Also, the user device 400 may include a Bluetooth module 408 for enabling wireless connection to other devices.

It should be understood that the components of the user device 400 as shown in FIG. 4 are examples of components that may be included in user device 400, and do not represent all possible components that can be included in the user device 400. For example, in various embodiments, the user device 400 may or may not include some of the components shown in FIG. 4. In some embodiments, the user device 400 may include additional components not shown in FIG. 4.

In an exemplary embodiment, the searching user may view an in-game move 430 being performed by an avatar *(e.g.,* associated with a peer player) within a virtual environment. As illustrated in FIG. 4, the in-game move 430 may be a jump or leap. After triggering a gesture-based search, the user may perform a corresponding gesture 440 in the real-world environment. The user may be holding, wearing, or otherwise be within sensing range of one or more sensors of user device 400. The user device 400 may provide the sensor data regarding the user gesture 440 to gesture-based search server 140 for analysis.

Gesture-based search server 140 may identify that the user gesture 440 characterized by the sensor data is associated with one or more available in-game moves. The available in-game moves may further be filtered based on one or more activity files associated with the conditions under which the search was triggered. For example, the search may have been triggered during or within a time proximity to certain gameplay sessions. Thus, a filtered subset of in-game moves may be identified. The gesture-based search server 140 may further determined that an identified or selected in-game move is mapped to a set of instructions corresponding to the input combination resulting in the identified or selected in-game move. The gesture-based search server 140 may thereafter generate a combo display 440 based on the mapped set of instructions and provide the generated combo display 440 to the user device 150 for presentation and display.

FIG. 5 is a block diagram of an exemplary electronic entertainment system that may be used in embodiments of the present invention. Entertainment system 500 may be an electronic game console. Alternatively, the entertainment system 500 may be implemented as a general-purpose computer, a set-top box, a hand-held game device, a tablet computing device, or a mobile computing device or phone. Entertainment systems may contain more or less operating components depending on a particular form factor, purpose, or design.

The CPU 510, the vector unit 515, the graphics processing unit 520, and the I/O processor 525 of FIG. 5 communicate via a system bus 585. Further, the CPU 510 of FIG. 5 communicates with the main memory 505 via a dedicated bus 580, while the vector unit 515 and the graphics processing unit 520 may communicate through a dedicated bus 590. The CPU 510 of FIG. 5 executes programs stored in the OS ROM 555 and the main memory 505. The main memory 505 of FIG. 5 may contain pre-stored programs and programs transferred through the I/O Processor 525 from a CD-ROM, DVD-ROM, or other optical disc (not shown) using the optical disc control unit 570. I/O Processor 525 of FIG. 5 may also allow for the introduction of content transferred over a wireless or other communications network (e.g., 4G, LTE, 3G, and so forth). The I/O processor 525 of FIG. 5 primarily controls data exchanges between the various devices of the entertainment system 500 including the CPU 510, the vector unit 515, the graphics processing unit 520, and the controller interface 535.

The graphics processing unit 520 of FIG. 5 executes graphics instructions received from the CPU 510 and the vector unit 515 to produce images for display on a display device (not shown). For example, the vector unit 515 of FIG. 5 may transform objects from three-dimensional coordinates to two-dimensional coordinates, and send the two-dimensional coordinates to the graphics processing unit 520. Furthermore, the sound processing unit 560 executes instructions to produce sound signals that are outputted to an audio device such as speakers (not shown). Other devices may be connected to the entertainment system 500 via the USB interface 545, and the IEEE 1394 interface 550 such as wireless transceivers, which may also be embedded in the system 500 or as a part of some other component such as a processor.

A user of the entertainment system 500 of FIG. 5 provides instructions via the controller interface 535 to the CPU 510. For example, the user may instruct the CPU 510 to store certain game information on the memory card 540 or other non-transitory computer-readable storage media or instruct a character in a game to perform some specified action.

The present invention may be implemented in an application that may be operable by a variety of end user devices. For example, an end user device may be a personal computer, a home entertainment system *(e.g.,* Sony PlayStation2^{®} or Sony PlayStation3^{®} or Sony PlayStation4^{®}), a portable gaming device *(e.g.,* Sony PSP^{®} or Sony Vita^{®}), or a home entertainment system of a different albeit inferior manufacturer. The present methodologies described herein are fully intended to be operable on a variety of devices. The present invention may also be implemented with cross-title neutrality wherein an embodiment of the present system may be utilized across a variety of titles from various publishers.

The present invention may be implemented in an application that may be operable using a variety of devices. Non-transitory computer-readable storage media refer to any medium or media that participate in providing instructions to a central processing unit (CPU) for execution. Such media can take many forms, including, but not limited to, non-volatile and volatile media such as optical or magnetic disks and dynamic memory, respectively. Common forms of non-transitory computer-readable media include, for example, a floppy disk, a flexible disk, a hard disk, magnetic tape, any other magnetic medium, a CD-ROM disk, digital video disk (DVD), any other optical medium, RAM, PROM, EPROM, a FLASHEPROM, and any other memory chip or cartridge.

Various forms of transmission media may be involved in carrying one or more sequences of one or more instructions to a CPU for execution. A bus carries the data to system RAM, from which a CPU retrieves and executes the instructions. The instructions received by system RAM can optionally be stored on a fixed disk either before or after execution by a CPU. Various forms of storage may likewise be implemented as well as the necessary network interfaces and network topologies to implement the same.

The foregoing detailed description of the technology has been presented for purposes of illustration and description. It is not intended to be exhaustive or to limit the technology to the precise form disclosed. Many modifications and variations are possible in light of the above teaching. The described embodiments were chosen in order to best explain the principles of the technology, its practical application, and to enable others skilled in the art to utilize the technology in various embodiments and with various modifications as are suited to the particular use contemplated.

## Claims

1. A method for gesture-based skill search, the method comprising:
storing (310) a map in memory regarding one or more virtual actions, each virtual action associated with corresponding instructions for performing the virtual action in a virtual environment, the virtual action representing a corresponding real-world action that includes one or more real-world movements in a real-world environment;
capturing (320) data by one or more sensor devices, the captured data regarding a real-world action that includes one or more movements by a user in the real-world environment during an interactive session associated with a virtual environment, wherein the real-world action is a recreation of a virtual action within the virtual environment;
executing instructions by a processor, wherein the executed instructions are for:
identifying (330) a subset of one or more available virtual actions based on a current progress level of the user within the virtual environment, wherein the subset of the available virtual actions is identified as available at the current identified progress level within the virtual environment;
identifying (340) that an identified virtual action of the available virtual actions in the subset includes a representation of the one or more movements described by the captured data regarding the real-world action based on a match between the captured data regarding the real-world action and the set of data associated with the identified virtual action as indicated by the map;
retrieving (350) data regarding an input combination associated with performing the identified virtual action in the virtual environment; and
generating a display of instructions corresponding to the identified virtual action based on the retrieved data, wherein the displayed instructions concern how to use a user device of the user to make an associated avatar perform the identified virtual action representing the one or more movements of the real-world action in accordance with the retrieved input combination.

2. The method of claim 1, wherein the stored map further stores data regarding the instructions corresponding to the identified virtual action.

3. The method of claim 1, wherein generating the display of the instructions is based on the stored map.

4. The method of claim 1, wherein the data regarding the real-world action that includes the movements by the user in the real-world environment is captured by at least one of a camera, accelerometer, gyroscope, and inertial sensor.

5. The method of claim 1, wherein the match is identified further based on a difference between the captured data by the sensor devices and the set of data associated with the identified virtual action being within a predetermined threshold.

6. The method of claim 1, wherein the virtual actions further includes filtering the available virtual actions based on one or more conditions associated with a search trigger or the current progress level.

7. The method of claim 6, further comprising identifying the conditions based on one or more activity files that store data regarding available game actions associated with the search trigger or the current progress level.

8. The method of claim 1, wherein the stored map is specific to at least one of a game title, set of game titles, game genre, game developer, game console, game controller, set of controller modifications, game environment, and in-game activity.

9. A system for gesture-based skill search, the system comprising:
memory that stores a map regarding one or more virtual actions, each virtual action associated with corresponding instructions for performing the virtual action in a virtual environment, the virtual action representing a corresponding real-world action that includes one or more real-world movements in a real-world environment; and
a processor that executes instructions stored in memory, wherein the processor executes instructions to:
initiate capture by one or more sensor devices of data regarding a real-world action that includes one or more movements by a user in the real-world environment during an interactive session associated with a virtual environment, wherein the real-world action is a recreation of a virtual action within the virtual environment,
identify a subset of one or more available virtual actions based on a current progress level of the user within the virtual environment, wherein the subset of the available virtual actions is identified as available at the current identified progress level within the virtual environment,
identify that an identified virtual action of the available virtual actions in the subset includes a representation of the one or more movements described by the captured data regarding the real world action based on a match between the captured data regarding the real-world action and the set of data associated with the identified virtual action as indicated by the map,
retrieve data regarding an input combination associated with performing the identified virtual action in the virtual environment, and
generate a display of instructions corresponding to the identified virtual action based on the retrieved data, wherein the displayed instructions concern how to use a user device of the user to make an associated avatar perform the identified virtual action representing the one or more movements of the real-world action in accordance with the retrieved input combination.

10. The system of claim 9, wherein the stored map further stores data regarding the instructions corresponding to the identified virtual action.

11. The system of claim 9, further comprising a communication interface, wherein the data regarding the action by the user in the real-world environment is captured by at least one of a camera, accelerometer, gyroscope, and inertial sensor in communication with the processor via the communication interface.

12. The system of claim 9, wherein the processor identifies the match further based on a difference between the captured data by the sensor devices and the set of data associated with the identified virtual action being within a predetermined threshold.

13. The system of claim 9, wherein the processor identifies the virtual actions by filtering the available virtual actions based on one or more conditions associated with a search trigger or the current progress level.

14. The system of claim 13, wherein the processor executes further instructions to identify the conditions based on one or more activity files that store data regarding available game actions associated with the search trigger or the current progress level.

15. A non-transitory, computer-readable storage medium having embodied thereon a program executable by a processor to perform a method for gesture-based skill search, the method comprising:
storing a map in memory regarding one or more virtual actions, each virtual action associated with corresponding instructions for performing the virtual action in a virtual environment, the virtual action representing a corresponding real-world action that includes one or more real-world movements in a real-world environment;
executing instructions by a processor, wherein the executed instructions are for:
capturing data by one or more sensor devices, the captured data regarding a real-world action that includes one or more movements by a user in the real-world environment during an interactive session associated with a virtual environment, wherein the real-world action is a recreation of a virtual action within the virtual environment; identifying a subset of one or more available virtual actions based on a current progress level of the user within the virtual environment, wherein the subset of the available virtual actions is identified as available at the current identified progress level within the virtual environment;
identifying that an identified virtual action of the available virtual actions in the subset includes a representation of the one or more movements described by the captured data regarding the real-world action based on a match between the captured data regarding the real-world action and the set of data associated with the identified virtual action as indicated by the map;
retrieving data regarding an input combination associated with performing the identified virtual action in the virtual environment; and
generating a display of instructions corresponding to the identified virtual action based on the retrieved data, wherein the displayed instructions concern how to use a user device of the user to make an associated avatar perform the identified virtual action representing the one or more movements of the real-world action in accordance with the retrieved input combination.

## Patentansprüche

1. Verfahren für eine gesten basierte Fähigkeitsrecherche, wobei das Verfahren Folgendes umfasst:
Speichern (310) eines Plans in einem Speicher bezüglich einer oder mehrerer virtueller Aktionen, wobei jede virtuelle Aktion entsprechenden Anweisungen zum Durchführen der virtuellen Aktion in einer virtuellen Umgebung zugeordnet ist, wobei die virtuelle Aktion eine entsprechende reale Aktion darstellt, die eine oder mehrere reale Bewegungen in einer realen Umgebung einschließt;
Erfassen (320) von Daten durch eine oder mehrere Sensorvorrichtungen, wobei die erfassten Daten eine reale Aktion betreffen, die eine oder mehrere Bewegungen durch einen Benutzer in der realen Umgebung während einer interaktiven Sitzung einschließt, die einer virtuellen Umgebung zugeordnet ist, wobei die reale Aktion eine Nachstellung einer virtuellen Aktion innerhalb der virtuellen Umgebung ist;
Ausführen von Anweisungen durch einen Prozessor, wobei die ausgeführten Anweisungen für Folgendes vorgesehen sind:
Identifizieren (330) einer Teilmenge von einer oder mehreren verfügbaren virtuellen Aktionen basierend auf einem aktuellen Fortschrittsniveau des Benutzers innerhalb der virtuellen Umgebung, wobei die Teilmenge der verfügbaren virtuellen Aktionen als auf dem aktuell identifizierten Fortschrittsniveau innerhalb der virtuellen Umgebung verfügbar identifiziert wird;
Identifizieren (340), dass eine identifizierte virtuelle Aktion der verfügbaren virtuellen Aktionen in der Teilmenge eine Darstellung der einen oder der mehreren Bewegungen einschließt, die durch die erfassten Daten bezüglich der realen Aktion beschrieben werden, basierend auf einer Übereinstimmung zwischen den erfassten Daten bezüglich der realen Aktion und dem Satz von Daten, der der identifizierten virtuellen Aktion zugeordnet ist, wie durch den Plan angegeben;
Abrufen (350) von Daten bezüglich einer Eingabekombination, die dem Durchführen der identifizierten virtuellen Aktion in der virtuellen Umgebung zugeordnet ist; und
Erzeugen einer Anzeige von Anweisungen, die der identifizierten virtuellen Aktion entsprechen, basierend auf den abgerufenen Daten, wobei die angezeigten Anweisungen betreffen, wie eine Benutzervorrichtung des Benutzers zu verwenden ist, um einen zugeordneten Avatar zu veranlassen, die identifizierte virtuelle Aktion durchzuführen, die die eine oder die mehreren Bewegungen der realen Aktion gemäß der abgerufenen Eingabekombination darstellt.

2. Verfahren nach Anspruch 1, wobei der gespeicherte Plan ferner Daten bezüglich den Anweisungen speichert, die der identifizierten virtuellen Aktion entsprechen.

3. Verfahren nach Anspruch 1, wobei das Erzeugen der Anzeige der Anweisungen auf dem gespeicherten Plan basiert.

4. Verfahren nach Anspruch 1, wobei die Daten bezüglich der realen Aktion, die die Bewegungen durch den Benutzer in der realen Umgebung einschließen, durch mindestens eines von einer Kamera, einem Beschleunigungsmesser, einem Gyroskop und einem Trägheitssensor erfasst werden.

5. Verfahren nach Anspruch 1, wobei die Übereinstimmung ferner basierend auf einer Differenz zwischen den von den Sensorvorrichtungen erfassten Daten und dem Satz von Daten, der der identifizierten virtuellen Aktion zugeordnet ist, identifiziert wird, wobei die Differenz innerhalb einer vorbestimmten Schwelle liegt.

6. Verfahren nach Anspruch 1, wobei die virtuellen Aktionen ferner das Filtern der verfügbaren virtuellen Aktionen basierend auf einer oder mehreren Bedingungen, die einem Rechercheauslöser oder dem aktuellen Fortschrittsniveau zugeordnet sind, einschließen.

7. Verfahren nach Anspruch 6, das ferner das Identifizieren der Bedingungen basierend auf einer oder mehreren Aktivitätsdateien umfasst, die Daten bezüglich verfügbarer Spielaktionen speichern, die dem Rechercheauslöser oder dem aktuellen Fortschrittsniveau zugeordnet sind.

8. Verfahren nach Anspruch 1, wobei der gespeicherte Plan für mindestens eines von einem Spieltitel, einer Gruppe von Spieltiteln, einem Spielgenre, einem Spielentwickler, einer Spielkonsole, einem Spielcontroller, einem Satz von Controller-Modifikationen, einer Spielumgebung und einer Aktivität im Spiel spezifisch ist.

9. System für eine gesten basierte Fähigkeitsrecherche, wobei das System Folgendes umfasst:
einen Speicher, der einen Plan bezüglich einer oder mehrerer virtueller Aktionen speichert, wobei jede virtuelle Aktion entsprechenden Anweisungen zum Durchführen der virtuellen Aktion in einer virtuellen Umgebung zugeordnet ist, wobei die virtuelle Aktion eine entsprechende reale Aktion darstellt, die eine oder mehrere reale Bewegungen in einer realen Umgebung einschließt; und
einen Prozessor, der Anweisungen ausführt, die in dem Speicher gespeichert sind, wobei der Prozessor die Anweisungen für Folgendes ausführt:
Einleiten des Erfassens von Daten durch eine oder mehrere Sensorvorrichtungen, die eine reale Aktion betreffen, die eine oder mehrere Bewegungen durch einen Benutzer in der realen Umgebung während einer interaktiven Sitzung einschließt, die einer virtuellen Umgebung zugeordnet ist, wobei die reale Aktion eine Nachstellung einer virtuellen Aktion innerhalb der virtuellen Umgebung ist,
Identifizieren einer Teilmenge von einer oder mehreren verfügbaren virtuellen Aktionen basierend auf einem aktuellen Fortschrittsniveau des Benutzers innerhalb der virtuellen Umgebung, wobei die Teilmenge der verfügbaren virtuellen Aktionen als auf dem aktuell identifizierten Fortschrittsniveau innerhalb der virtuellen Umgebung verfügbar identifiziert wird,
Identifizieren, dass eine identifizierte virtuelle Aktion der verfügbaren virtuellen Aktionen in der Teilmenge eine Darstellung der einen oder der mehreren Bewegungen einschließt, die durch die erfassten Daten bezüglich der realen Aktion beschrieben werden, basierend auf einer Übereinstimmung zwischen den erfassten Daten bezüglich der realen Aktion und dem Satz von Daten, der der identifizierten virtuellen Aktion zugeordnet ist, wie durch den Plan angegeben,
Abrufen von Daten bezüglich einer Eingabekombination, die dem Durchführen der identifizierten virtuellen Aktion in der virtuellen Umgebung zugeordnet ist, und
Erzeugen einer Anzeige von Anweisungen, die der identifizierten virtuellen Aktion entsprechen, basierend auf den abgerufenen Daten, wobei die angezeigten Anweisungen betreffen, wie eine Benutzervorrichtung des Benutzers zu verwenden ist, um einen zugeordneten Avatar zu veranlassen, die identifizierte virtuelle Aktion durchzuführen, die die eine oder die mehreren Bewegungen der realen Aktion gemäß der abgerufenen Eingabekombination darstellt.

10. Verfahren nach Anspruch 9, wobei der gespeicherte Plan ferner Daten bezüglich den Anweisungen speichert, die der identifizierten virtuellen Aktion entsprechen.

11. System nach Anspruch 9, das ferner eine Kommunikationsschnittstelle umfasst, wobei die Daten bezüglich der Aktion durch den Benutzer in der realen Umgebung durch mindestens eines von einer Kamera, einem Beschleunigungsmesser, einem Gyroskop und einem Trägheitssensor erfasst werden, die über die Kommunikationsschnittstelle mit dem Prozessor in Verbindung stehen.

12. System nach Anspruch 9, wobei der Prozessor die Übereinstimmung ferner basierend auf einer Differenz zwischen den von den Sensorvorrichtungen erfassten Daten und dem Satz von Daten, der der identifizierten virtuellen Aktion zugeordnet ist, identifiziert, wobei die Differenz innerhalb einer vorbestimmten Schwelle liegt.

13. System nach Anspruch 9, wobei der Prozessor die virtuellen Aktionen durch Filtern der verfügbaren virtuellen Aktionen basierend auf einer oder mehreren Bedingungen, die einem Rechercheauslöser oder dem aktuellen Fortschrittsniveau zugeordnet sind, identifiziert.

14. System nach Anspruch 13, wobei der Prozessor weitere Anweisungen ausführt, um die Bedingungen basierend auf einer oder mehreren Aktivitätsdateien zu identifizieren, die Daten bezüglich verfügbarer Spielaktionen speichern, die dem Rechercheauslöser oder dem aktuellen Fortschrittsniveau zugeordnet sind.

15. Nicht transitorisches, computerlesbares Speicherungsmedium, das ein darauf verkörpertes Programm aufweist, das von einem Prozessor ausgeführt werden kann, um ein Verfahren für eine gestenbasierte Fähigkeitsrecherche durchzuführen, wobei das Verfahren Folgendes umfasst:
Speichern eines Plans in einem Speicher bezüglich einer oder mehrerer virtueller Aktionen, wobei jede virtuelle Aktion entsprechenden Anweisungen zum Durchführen der virtuellen Aktion in einer virtuellen Umgebung zugeordnet ist, wobei die virtuelle Aktion eine entsprechende reale Aktion darstellt, die eine oder mehrere reale Bewegungen in einer realen Umgebung einschließt;
Ausführen von Anweisungen durch einen Prozessor, wobei die ausgeführten Anweisungen für Folgendes vorgesehen sind:
Erfassen von Daten durch eine oder mehrere Sensorvorrichtungen, wobei die erfassten Daten eine reale Aktion betreffen, die eine oder mehrere Bewegungen durch einen Benutzer in der realen Umgebung während einer interaktiven Sitzung einschließt, die einer virtuellen Umgebung zugeordnet ist, wobei die reale Aktion eine Nachstellung einer virtuellen Aktion innerhalb der virtuellen Umgebung ist; Identifizieren einer Teilmenge von einer oder mehreren verfügbaren virtuellen Aktionen basierend auf einem aktuellen Fortschrittsniveau des Benutzers innerhalb der virtuellen Umgebung, wobei die Teilmenge der verfügbaren virtuellen Aktionen als auf dem aktuell identifizierten Fortschrittsniveau innerhalb der virtuellen Umgebung verfügbar identifiziert wird;
Identifizieren, dass eine identifizierte virtuelle Aktion der verfügbaren virtuellen Aktionen in der Teilmenge eine Darstellung der einen oder der mehreren Bewegungen einschließt, die durch die erfassten Daten bezüglich der realen Aktion beschrieben werden, basierend auf einer Übereinstimmung zwischen den erfassten Daten bezüglich der realen Aktion und dem Satz von Daten, der der identifizierten virtuellen Aktion zugeordnet ist, wie durch den Plan angegeben;
Abrufen von Daten bezüglich einer Eingabekombination, die dem Durchführen der identifizierten virtuellen Aktion in der virtuellen Umgebung zugeordnet ist; und
Erzeugen einer Anzeige von Anweisungen, die der identifizierten virtuellen Aktion entsprechen, basierend auf den abgerufenen Daten, wobei die angezeigten Anweisungen betreffen, wie eine Benutzervorrichtung des Benutzers zu verwenden ist, um einen zugeordneten Avatar zu veranlassen, die identifizierte virtuelle Aktion durchzuführen, die die eine oder die mehreren Bewegungen der realen Aktion gemäß der abgerufenen Eingabekombination darstellt.

## Revendications

1. Procédé destiné à une recherche de compétence basée sur des gestes, le procédé comprenant :
le stockage (310) d'une carte en mémoire concernant une ou plusieurs actions virtuelles, chaque action virtuelle étant associée à des instructions correspondantes permettant de mettre en œuvre l'action virtuelle dans un environnement virtuel, l'action virtuelle représentant une action de monde réel correspondante qui comporte un ou plusieurs mouvements de monde réel dans un environnement de monde réel ;
la capture (320) de données par un ou plusieurs dispositifs capteurs, les données capturées concernant une action de monde réel qui comporte un ou plusieurs mouvements par un utilisateur dans l'environnement de monde réel pendant une session interactive associée à un environnement virtuel, dans lequel l'action de monde réel est une recréation d'une action virtuelle au sein de l'environnement virtuel ;
l'exécution d'instructions par un processeur, dans lequel les instructions exécutées sont destinées à :
l'identification (330) d'un sous-ensemble d'une ou plusieurs actions virtuelles disponibles en fonction d'un niveau de progression actuel de l'utilisateur au sein de l'environnement virtuel, dans lequel le sous-ensemble des actions virtuelles disponibles est identifié comme disponible au niveau de progression identifié actuel au sein de l'environnement virtuel ;
l'identification (340) qu'une action virtuelle identifiée parmi les actions virtuelles disponibles dans le sous-ensemble comporte une représentation du ou des mouvements décrits par les données capturées concernant l'action de monde réel en fonction d'une concordance entre les données capturées concernant l'action de monde réel et l'ensemble de données associé à l'action virtuelle identifiée telle qu'indiquée par la carte ;
la récupération (350) de données concernant une combinaison d'entrée associée à la mise en œuvre de l'action virtuelle identifiée dans l'environnement virtuel ; et
la génération d'un affichage d'instructions correspondant à l'action virtuelle identifiée en fonction des données récupérées, dans lequel les instructions affichées concernent la manière d'utiliser un dispositif utilisateur de l'utilisateur pour faire en sorte qu'un avatar associé mette en œuvre l'action virtuelle identifiée représentant le ou les mouvements de l'action de monde réel conformément à la combinaison d'entrée récupérée.

2. Procédé selon la revendication 1, dans lequel la carte stockée stocke en outre des données concernant les instructions correspondant à l'action virtuelle identifiée.

3. Procédé selon la revendication 1, dans lequel la génération de l'affichage des instructions est en fonction de la carte stockée.

4. Procédé selon la revendication 1, dans lequel les données concernant l'action de monde réel qui comportent les mouvements par l'utilisateur dans l'environnement de monde réel sont capturées par au moins l'un parmi une caméra, un accéléromètre, un gyroscope et un capteur inertiel.

5. Procédé selon la revendication 1, dans lequel la concordance est identifiée en fonction en outre d'une différence entre les données capturées par les dispositifs capteurs et l'ensemble de données associé à l'action virtuelle identifiée dans les limites d'un seuil prédéterminé.

6. Procédé selon la revendication 1, dans lequel les actions virtuelles comportent en outre un filtrage des actions virtuelles disponibles en fonction d'une ou plusieurs conditions associées à un déclencheur de recherche ou au niveau de progression actuel.

7. Procédé selon la revendication 6, comprenant en outre l'identification des conditions en fonction d'un ou plusieurs fichiers d'activité qui stockent des données concernant des actions de jeu disponibles associées au déclencheur de recherche ou au niveau de progression actuel.

8. Procédé selon la revendication 1, dans lequel la carte stockée est spécifique à au moins l'un parmi un titre de jeu, un ensemble de titres de jeu, un genre de jeu, un développeur de jeu, une console de jeu, une manette de jeu, un ensemble de modifications de manette, un environnement de jeu et une activité dans le jeu.

9. Système destiné à une recherche de compétence basée sur des gestes, le système comprenant :
de la mémoire qui stocke une carte concernant une ou plusieurs actions virtuelles, chaque action virtuelle étant associée à des instructions correspondantes permettant de mettre en œuvre l'action virtuelle dans un environnement virtuel, l'action virtuelle représentant une action de monde réel correspondante qui comporte un ou plusieurs mouvements de monde réel dans un environnement de monde réel ; et
un processeur qui exécute des instructions stockées en mémoire, dans lequel le processeur exécute des instructions pour :
initier une capture par un ou plusieurs dispositifs capteurs de données concernant une action de monde réel qui comporte un ou plusieurs mouvements par un utilisateur dans l'environnement de monde réel pendant une session interactive associée à un environnement virtuel, dans lequel l'action de monde réel est une recréation d'une action virtuelle au sein de l'environnement virtuel,
identifier un sous-ensemble d'une ou plusieurs actions virtuelles disponibles en fonction d'un niveau de progression actuel de l'utilisateur au sein de l'environnement virtuel, dans lequel le sous-ensemble des actions virtuelles disponibles est identifié comme disponible au niveau de progression identifié actuel au sein de l'environnement virtuel,
identifier qu'une action virtuelle identifiée parmi les actions virtuelles disponibles dans le sous-ensemble comporte une représentation du ou des mouvements décrits par les données capturées concernant l'action de monde réel en fonction d'une concordance entre les données capturées concernant l'action de monde réel et l'ensemble de données associé à l'action virtuelle identifiée telle qu'indiquée par la carte,
récupérer des données concernant une combinaison d'entrée associée à la mise en œuvre de l'action virtuelle identifiée dans l'environnement virtuel, et
générer un affichage d'instructions correspondant à l'action virtuelle identifiée en fonction des données récupérées, dans lequel les instructions affichées concernent la manière d'utiliser un dispositif utilisateur de l'utilisateur pour faire en sorte qu'un avatar associé mette en œuvre l'action virtuelle identifiée représentant le ou les mouvements de l'action de monde réel conformément à la combinaison d'entrée récupérée.

10. Système selon la revendication 9, dans lequel la carte stockée stocke en outre des données concernant les instructions correspondant à l'action virtuelle identifiée.

11. Système selon la revendication 9, comprenant en outre une interface de communication, dans lequel les données concernant l'action par l'utilisateur dans l'environnement de monde réel sont capturées par au moins l'un parmi une caméra, un accéléromètre, un gyroscope et un capteur inertiel en communication avec le processeur par l'intermédiaire de l'interface de communication.

12. Système selon la revendication 9, dans lequel le processeur identifie la concordance en fonction en outre d'une différence entre les données capturées par les dispositifs capteurs et l'ensemble de données associé à l'action virtuelle identifiée dans les limites d'un seuil prédéterminé.

13. Système selon la revendication 9, dans lequel le processeur identifie les actions virtuelles par filtrage des actions virtuelles disponibles en fonction d'une ou plusieurs conditions associées à un déclencheur de recherche ou au niveau de progression actuel.

14. Système selon la revendication 13, dans lequel le processeur exécute d'autres instructions pour identifier les conditions en fonction d'un ou plusieurs fichiers d'activité qui stockent des données concernant des actions de jeu disponibles associées au déclencheur de recherche ou au niveau de progression actuel.

15. Support de stockage non transitoire lisible par ordinateur sur lequel est incorporé un programme exécutable par un processeur pour mettre en œuvre un procédé destiné à une recherche de compétence basée sur des gestes, le procédé comprenant :
le stockage d'une carte en mémoire concernant une ou plusieurs actions virtuelles, chaque action virtuelle étant associée à des instructions correspondantes permettant de mettre en œuvre l'action virtuelle dans un environnement virtuel, l'action virtuelle représentant une action de monde réel correspondante qui comporte un ou plusieurs mouvements de monde réel dans un environnement de monde réel ;
l'exécution d'instructions par un processeur, dans lequel les instructions exécutées sont destinées à :
la capture de données par un ou plusieurs dispositifs capteurs, les données capturées concernant une action de monde réel qui comporte un ou plusieurs mouvements par un utilisateur dans l'environnement de monde réel pendant une session interactive associée à un environnement virtuel, dans lequel l'action de monde réel est une recréation d'une action virtuelle au sein de l'environnement virtuel ; l'identification d'un sous-ensemble d'une ou plusieurs actions virtuelles disponibles en fonction d'un niveau de progression actuel de l'utilisateur au sein de l'environnement virtuel, dans lequel le sous-ensemble des actions virtuelles disponibles est identifié comme disponible au niveau de progression identifié actuel au sein de l'environnement virtuel ;
l'identification qu'une action virtuelle identifiée parmi les actions virtuelles disponibles dans le sous-ensemble comporte une représentation du ou des mouvements décrits par les données capturées concernant l'action de monde réel en fonction d'une concordance entre les données capturées concernant l'action de monde réel et l'ensemble de données associé à l'action virtuelle identifiée telle qu'indiquée par la carte ;
la récupération de données concernant une combinaison d'entrée associée à la mise en œuvre de l'action virtuelle identifiée dans l'environnement virtuel ; et
la génération d'un affichage d'instructions correspondant à l'action virtuelle identifiée en fonction des données récupérées, dans lequel les instructions affichées concernent la manière d'utiliser un dispositif utilisateur de l'utilisateur pour faire en sorte qu'un avatar associé mette en œuvre l'action virtuelle identifiée représentant le ou les mouvements de l'action de monde réel conformément à la combinaison d'entrée récupérée.
